(19) Europäisches Patentamt
European Patent Office
Office européen des brevets

(11) **EP 3 431 940 B1**

(12) **EUROPEAN PATENT SPECIFICATION**

(45) Date of publication and mention
of the grant of the patent:
**20.12.2023 Bulletin 2023/51**

(21) Application number: **17181804.0**

(22) Date of filing: **18.07.2017**

(51) International Patent Classification (IPC):
**G02B 6/28** *(2006.01)*  **G02B 6/293** *(2006.01)*
**G01J 3/28** *(2006.01)*  **G02B 6/12** *(2006.01)*
**H04J 14/02** *(2006.01)*  **G01J 3/02** *(2006.01)*

(52) Cooperative Patent Classification (CPC):
**G01J 3/0205; G01J 3/0218; G01J 3/0256;
G01J 3/2803; G02B 6/29301;** G02B 6/2813

(54) **SPECTROMETER COMPRISING AT LEAST TWO SEPARATE WAVGEGUIDES HAVING DIFFERENT EFFECTIVE OPTICAL PATH LENGTHS**

SPEKTROMETER MIT MINDESTENS ZWEI WELLENLEITERN UNTERICHER EFFEKTIVER OPTISCHER WEGLÄNGE

SPECTROMÈTRE COMPRENANT AU MOINT DEUX GUIDES D'ONDE AYANT DES DIFFÉRENTES LONGEURS DE CHEMIN OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.01.2019 Bulletin 2019/04**

(73) Proprietor: **AIP Leibniz-Institut für Astrophysik
14482 Potsdam (DE)**

(72) Inventors:
• **Dr. Zhang, Ziyang
13597 Berlin (DE)**
• **Stoll, Andreas
14469 Potsdam (DE)**
• **Roth, Martin
14547 Beelitz (DE)**

(74) Representative: **Heinemeyer, Karsten et al
AdvInno Patent-u. Rechtsanwaltspart. mbB
Heinemeyer & Joachim
Sandstrasse 17-23
23552 Lübeck (DE)**

(56) References cited:
• **ANDREAS STOLL ET AL: "High-Resolution Arrayed-Waveguide-Gratings in Astronomy: Design and Fabrication Challenges", PHOTONICS, vol. 4, no. 2, 10 April 2017 (2017-04-10), page 30, XP055435237, DOI: 10.3390/photonics4020030**
• **GATKINE PRADIP ET AL: "Development of high-resolution arrayed waveguide grating spectrometers for astronomical applications: first results", PROCEEDINGS OPTICAL DIAGNOSTICS OF LIVING CELLS II, SPIE, US, vol. 9912, 22 July 2016 (2016-07-22), pages 991271-991271, XP060074994, ISSN: 0277-786X, DOI: 10.1117/12.2231873 ISBN: 978-1-5106-1324-9**

**Description**

The present invention relates to a spectrometer and a method for splitting the electromagnetic radiation into at least two parts of radiation of different wavelengths. This technology is, for example, applicable to astronomical telescope systems or to wavelength division multiplexing optical transmission networks.

A special application area for spectrometer is their use for spectrography. Here spectrographs are used in science, particularly in astronomy and physical or analytical chemistry to achieve information about chemical or physical properties or objects. Thus, light emitted from the substances or objects under consideration can be analysed and characterised with regard to its frequency spectrum, so as to draw conclusions about substance's or object's atomic composition or properties.

Beyond that, the telecommunication sector has evolved drastically for the last decades, driven by new technologies and new habits of consumers. Communication networks have evolved to match the strong increase of content request. Here, optical communication networks are key elements to sustain higher rate of content deliveries.

In connection therewith, WO 2011/044618 A1 describes an integrated photonic spectrograph for displaying radiation spectra received from a source such as a telescope. A photonic imaging device in the form of a spectrograph is described which includes a plurality of input ports in the form of multi-mode optical fibres. The optical fibres are adapted for receiving an arbitrary incident electromagnetic radiation field containing one or more spatial propagation modes such as an optical signal from a telescope. The spectrograph includes a coupling device in the form of photonic lantern attached to the multi-mode optical fibre for efficiently coupling the incident electromagnetic radiation field into an arbitrary plurality of single-mode optical fibres for diffraction-limited single-mode propagation. The number of single-mode fibres is greater than or equal to the number of spatial modes supported incident radiation field such that efficient coupling is achieved. The single-mode optical signals output from the single-mode fibres are received by an optical manipulation device in the form of an array waveguide grating which selectively combines the single-mode signals into a continuous optical spectrum. For detecting the continuous optical spectrum output from the array waveguide grating an optical detector is provided.

Furthermore, optical networks often use devices for splitting polychromatic light in radiation of different wavelengths. For example, in optical wavelength division multiplexing transmission systems for transmitting a plurality of optical signals through a single optical fibre by assigning different wavelengths to each optical signal, it is possible not only to remarkably increase the capacity of the transmission paths, but also to perform a wavelength addressing operation in which information about the addressee of the relevant signal corresponds to each wavelength itself. In this context CA 2 316 253 describes such an optical wavelength division multiplexing transmission network comprising an arrayed-waveguide grating type multiplexing/demultiplexing circuit having a plurality of input ports as well as a plurality of output ports. With the help of this device it is possible to realize a full-mesh Wavelength Division Multiplexing (WDM) transmission network system only by using optical signals of N wavelengths, in which each of N x N signals paths for connecting apparatuses with each other can be independently connected.

While traditional spectrometers are based on one-to-one spectral-to-spatial mapping, spectrometers can also operate on more complex spectral-to-spatial mapping. In these implementations, a transmission matrix is used to store the spatial intensity profile generated by different input wavelengths. A reconstruction algorithm allows an arbitrary input spectrum to be recovered from the measured spatial intensity distribution. While operating a spectrometer on spectral-to-spatial mapping is more complicated than the traditional grating or prism based spectrometers, it affords more flexibility in the choice of a dispersive element. Spectrometers operating on spectral-to-spatial mapping have been demonstrated using a disordered photonic crystal [Z. Xu, Z. Wang, M. E. Sullivan, D. J. Brady, S. H. Foulger, and A. Adibi, "Multimodal multiplex spectroscopy using photonic crystals," Opt. Express 11 (18), 2126-2133 (2003)], a random scattering medium [T. W. Kohlgraf-Owens and A. Dogariu, "Transmission matrices of random media: means for spectral polarimetric measurements," Opt. Lett. 35(13), 2236-2238 (2010)], and an array of Bragg fibers [Q. Hang, B. Ung, I. Syed, N. Guo, and M. Skorobogatiy, "Photonic bandgap fiber bundle spectrometer," Appl Opt. 49(25), 4791-4800 (2010)].

In addition to this [B. Redding and H. Cao, "Using a multimode fiber as a high-resolution, low-loss spectrometer," Opt. Lett. 37(16), 3384-3386 (2012)] describes that a multimode optical fibre can be used as dispersive element for spectrometer being operated on spectral-to-spatial mapping, because the long propagation length and the minimal loss enables high spectral resolution and good sensitivity. Further prior art spectrometers are disclosed in ANDREAS STOLL ET AL: "High-Resolution Arrayed-Waveguide-Gratings in Astronomy: Design and Fabrication Challenges", PHOTONICS, vol. 4, no. 2, 10 April 2017, page 30, and GATKINE PRADIP ET AL: "Development of high-resolution arrayed waveguide grating spectrometers for astronomical applications: first results", PROCEEDINGS OPTICAL DIAGNOSTICS OF LIVING CELLS II, SPIE, US, vol. 9912, 22 July 2016, pages 991271-991271.

The instant invention is directed to the problem of how to overcome some or all of the problems known from the prior art. Compared to conventional solutions more compact, more efficient and more reliable devices for splitting polychromatic electromagnetic radiation into radiation of different wavelengths should be obtained. One objective of the invention is therefore to provide a spectrometer which allows a more flexible operation compared to conventional spectrographs based on prism, free-space-based-gratings, lenses and other optical elements. Another objective is to provide a spectrometer for the use in spectrographs, which is more compact and causes lower maintenance costs compared to spectrometers known from the prior art. Furthermore, it should be comparatively easy to integrate the new technology for splitting electromagnetic radiation into radiation of different wavelengths in optical systems that utilize optical fibres as light guiding medium. Still another objective of the invention is to have low integration needs for a spectrometer irrespective if it is used as a multiplexer or as a demultiplexer in an optical network.

These objectives are met with the spectrometer according to claim 1. Preferred embodiments are disclosed in the dependent claims and will be explained in detail in the following. Additionally, certain specific embodiments of the invention are explained with the help of drawings.

The invention is defined by a spectrometer accordiing to claim 1.

In one preferred embodiment one of the at least two optical fibres is straight while at least one other fibre is curved. Furthermore, advantageously one of the at least two optical fibres is straight while at least one other optical fibre has a helix or spline structure. In the claimed spectrometer the dispersive waveguide element comprises a bundle of optical fibres some of which have different effective optical path lengths.

According to the invention, the optical fibres of the dispersive waveguide element, especially dispersive waveguide bundle, are arranged in the 3D core bundle or matrix. Furthermore, in a preferred form of the waveguide element at least one straight and a plurality of curved cylinders or fibres are combined to provide multiple optical paths with different optical path lengths. In general, other forms are also possible to utilize the 3-D space more efficiently for example with a helix structure, spline structure or a combination of free forms.

According to the invention there is an optical element comprising a waveguide, which functions as spectrometer's input. This input of the spectrometer is optically guiding incoming radiation to at least one following optical element.

The input element for electromagnetic radiation comprises a single mode fibre. This fibre can be a multicore as well as a single core single mode fibre. In the simplest possible case, the fibre has a cylindrical form and is placed in such a way, that the central axis of the cylinder and the central axis of the optical path coincide. In general, the index profile of the waveguide building the input of the spectrometer can be a single step function, multiple step function or gradient function. Subject to the technical needs the core diameter of the fibre as well as the cladding, in particular its refraction index and the form of the boundary between core and cladding are selected. For example, the boundary between the core and the cladding may either be abrupt, in step-index fibres, or gradual, in graded-index fibres. For the selection of the core and cladding it is taken into account, that depending on the core diameter and the refractive index difference existing between the core and the cladding, either only the basic mode or additionally several higher modes can propagate in an optical waveguide.

In another embodiment there is an offset between a central axis of the optical path and the central axis off the waveguide used as an input, which is preferably a single mode fibre. The function of the input for electromagnetic radiation is to guide the radiation, especially light, covering a broad range of wavelengths with minimal loss to the following optical elements of the spectrometer.

According to the invention between the input element and the dispersive waveguide element a distribution core is arranged. Advantageously the distribution core is a multi-mode fibre comprising a large core. Again, in the simplest case this core is a cylinder placed along the fibre axis. The index profile of the distribution core is defined by a single step function or a gradient function to adjust the mode diameter and distribution. The length and the diameter of the distribution core is designed, so that light propagates like it does in free space with a uniform core index distribution.

The distribution core is designed in such a manner that a wave-front is formed on an outlet plane of the distribution core. This outlet plane is arranged at an interface to the next optical element, which is optically coupled to the distribution core. Because of this specific design of the distribution core a wave-front is formed on the outlet plane of the distribution core and for this reason on the incident plane of the optical element coupled to the distribution core. According to the invention the wave-front of the radiation propagating through the distribution core is formed on the incident plane of the dispersive waveguide element and therefore on the incident plane of the at least two optical fibres of the dispersive waveguide element.

Beyond that, preferably the distribution core is designed, so that neither reflections at the interface between core and cladding nor multi-mode interferences occur.

According to the invention the fibres of the dispersive waveguide are arranged in a manner such that the normal off the incident plane of each fibre of the dispersive waveguide matches with a normal of the local wave-front surface adjacent to the incident plane of said fibre. For this reason, an efficient coupling between the distribution core and the dispersive waveguide is achieved. Thus, the normal of the starting cross-section of each waveguide being part of the dispersive waveguide element matches with the normal of the local wave front surface adjacent to the inlet plane of each fibre.

The wave-front is essentially an equal-phase plane which originates from the radiation input of the distribution core and arrives at the inlet plane on the dispersive waveguide element. Advantageously, each waveguide or optical fibre is oriented along the normal direction of the local wave-front surface area.

Preferably the dispersive waveguide element comprises at least three or four optical fibres having different effective optical path lengths. The distribution of the different fibres of the dispersive waveguide element, which is a dispersive waveguide bundle, on the wave-front of the incoming radiation defines a 2D-matrix, which can be a periodic grid following a triangular, quadrilateral or higher-order polygonal patterns. To minimize the transition loss the waveguides are advantageously densely packed, so that the sum of the field distribution of the individual waveguides cover the input mode field distribution at the incident plane of the dispersive waveguide element.

In still another embodiment of the invention to use tapers at the dispersive waveguide element to enhance the mode-field coverage from the wave-front at the outlet plane to the individual waveguide mode in the dispersive waveguide element, especially in the dispersive waveguide bundle. According to one specific embodiment the tapers are made with the core diameter larger than the normal single mode optical fibre of the dispersive waveguide element. According to an alternative embodiment the tapers are made with a core diameter much smaller than the normal single mode waveguide. The advantage of using such an inverse taper is that the mode field is enlarged without the risk of generating higher order modes.

Still another embodiment of the invention does not use geometrical tapers, in which the physical dimension of the core region is adiabatically transitioned. According to this alternative, tapers are realized by introducing a gradient index change along the light propagation direction. The taper transition either by core size variation or gradient index change should be adiabatic, especially smooth transition has to be ensured to prevent excessive light scattering in the taper region.

According to the invention the dispersive waveguide element is made of a bundle of multiple waveguides, respectively optical fibres, having different optical path lengths. In a preferred embodiment of the invention the path length increase from the optical path length of the shortest waveguide of the dispersive waveguide element, preferably a dispersive waveguide bundle, to each other waveguide is defined as follows:

$$l_{ij} = l_{00} + i\Delta l_1 + j\Delta l_2,$$

and

$$\Delta l_{i,j} = \frac{\lambda_0^2}{n_g \cdot FSR_{1,2}},$$

with:

$l_{00}$:     optical path length of the shortest waveguide / optical fibre of the dispersive waveguide element;

$\Delta l_1$:     optical path length increase in horizontal;

$\Delta l_2$:     optical path length increase in vertical;

$\Delta l_{i,j}$:     optical path length increase in horizontal and vertical direction from each waveguide of the dispersive waveguide element to the shortest waveguide / optical fibre;

$\lambda_0$:     central wavelength;

$n_g$:     group velocity refractive index, usually called the group index and

$FSR_{i,j}$:     free spectral range for horizontal and vertical dispersion.

According to the invention, electromagnetic radiation is guided from the dispersive waveguide element into an imaging core, where different wave-fronts leaving different optical fibres of the dispersive waveguide propagate and interfere with each other in a manner such that at least one typical interference pattern appears on an output plane of the imaging core. Preferably the outlet plane of the dispersive waveguide element is coupled to the incident plane in a manner so that an effective coupling is realized, transition loss is minimized and the mode-field coverage is maximized. To achieve an effective coupling between the dispersive waveguide element and the imaging core, the same arrangements as already described regarding the coupling of a distribution core to the dispersive waveguide element could be used.

In the simplest case, the imaging core is a cylinder placed along the fibre axis. The index profile of the imaging core is defined by a single step function or a gradient function to adjust the mode diameter. The length and the diameter of the distribution core is designed, so that light propagates like it does in free space with a uniform core index distribution, without reaching the core-cladding-interface or disturbances caused by any defects.

In the imaging core wave-fronts coming from the dispersive waveguide element propagate and interfere with each other. Due to the phase relations among these wave-fronts, preferably generated by the design of the different waveguides of the dispersive waveguide element based on the equations shown above, the final interference pattern appears on the output plane of the imaging core in the form of one or a group of focusing spots. Here, each focusing spot on the output plane of the imaging core represents one specific wavelength channel. Favourably the locations of these focusing spots are separated with respect to the wavelengths.

Furthermore, according to the invention the electromagnetic radiation of at least two different wavelengths leaving the output of the spectrometer is guided into a multi-core single-mode waveguide and/or a sensor array. Favourably, the output plane, respectively the focusing plane of the imaging core is used as output of the spectrometer. In a special embodiment of the invention the output element comprises a group of single-mode waveguide connected to the focusing plane of the imaging core. It is conceivable, that the waveguides proceed through an optional fan-out transition and get further separated to prevent cross-channel coupling.

In another embodiment the different wavelength channels propagating from the focusing plane of the output element proceed through an optional non-guided free-space-based lens system before impinging on a 2-dimensional sensor array. This sensor array may comprise a photo detector array, a charge-coupled device (CCD) sensor chip, a CMOS sensor an infrared array and/or a camera system.

Further features properties and advantages of the present invention will become clear from the following description of embodiments in conjunction with the accompanying drawings.

The embodiments do not limit the scope of the present invention which is determined by the independent claim.

Fig. 1:     Schematic layout of an all-fiber spectrometer according to the invention;

Fig. 2     Input element realized as single-core single-mode input;

Fig. 3     distribution core;

Fig. 4     dispersive waveguide bundle;

Fig. 5     placement of the waveguide bundle on the wave-front surface;

Fig. 6     waveguide matrix distribution on the wave-front surface;

Fig. 7     waveguide tapers for maximizing the mode-field coverage;

Fig. 8     imaging core;

Fig. 9     Focusing spots / wavelength channel distribution;

Fig. 10     Degenerate focusing path;

Fig. 11     multi-core single-mode waveguides;

Fig. 12     focusing spots directly on to a 2D sensor array;

Fig. 13     3D spectrometer realized in a bulk material (glass) platform;

Fig. 14     all-fiber spectrometer as spectrograph in an astronomical observatory;

Fig. 15     all-fiber spectrometer as wavelength (de)multiplexer in a fiber optic network;

Fig. 16     all-fiber spectrometer as read-out unit for an optical sensing network.

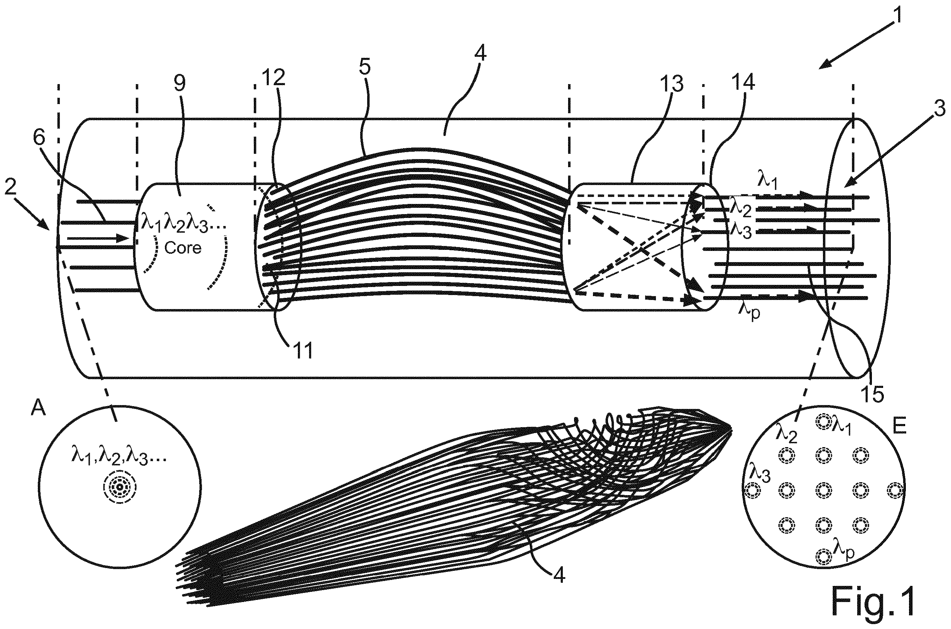

Figure 1 shows a specific spectrometer 1 according to the invention, which splits incoming polychromatic radiation, especially light, into radiation of different wavelengths. The spectrometer 1 is contained in a waveguide 5 with a common cladding material 17 surrounding the waveguide 5 and a variation of core material distributions. The core has a higher refractive index and light is guided in the core region, while the cladding 17 envelopes the core region and provides optical isolation from disturbances outside the fibre region.

The spectrometer 1 shown in figure 1 comprises five main functional segments. These functional elements of the spectrometer 1 are an input 2 with an input element 6, a distribution core 9, a dispersive waveguide element 4, in this embodiment formed of a dispersive waveguide bundle of multiple optical fibres each being a separate waveguide 5, an imaging core 13 and an output element 15 with an output 3. For electromagnetic radiation, especially light travelling along the $+Z$ direction from the input 2 to the output 3 the spectrometer 1 works as a wavelength de-multiplexer. Light consisting of multiple wavelength channels ($\lambda1$, $\lambda2$, $\lambda3$...) propagating through the input element 6 will get separated at the output element. In general, the optical system shown in figure 1 is reciprocal (from output E to input A). When wavelength channels are launched from the corresponding cores in output element E, they will get multiplexed and come out combined at the input element A.

Assuming that the spectrometer 1 works as a de-multiplexer (input A to output E), it functions as follows. Light consisting of multiple wavelength channels is launched into the spectrometer 1 through the input element 6. In the distribution core 9, light travels freely and broadens its wave-front 10 upon the dispersive waveguide element 4. The wave-front 10 is decomposed and coupled into separate waveguides 5 of the dispersive waveguide element 4. Here, the waveguides 5 form a bundle, which carries the light components, introduces extra phase delay due to the different optical path lengths, and guides them onto the incident plane of the imaging core 13. While propagating through the imaging core 13 the individual light components interfere and due to the extra phase delay, different wavelengths will be imaged / focused at different locations on a focusing plane 14 at the output of the imaging core 13. In the output element 15, the separated wavelength channels are either guided into individual waveguides 5 for further processing or collected via an optional lens system onto a detector / camera system 16. Thus, the spectrometer 1 function is complete.

In the following the different main functional segments of the spectrometer 1 are explained in detail with the help of the figures.

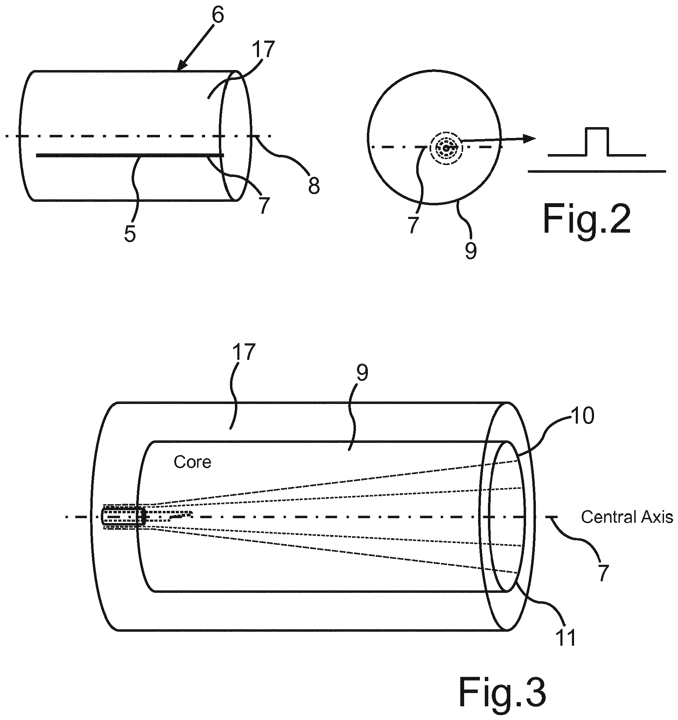

The first functional segment of the spectrometer 1 is an input element 6 and designed as a multi-core single-mode or single-core single-mode fibre. In the simplest case, the single-core is a cylinder placed along the waveguide axis 7, as shown in figure 2. The index profile can be a single-step function, multiple-step function or gradient function to adjust the mode profile and/or diameter. A certain offset in the core placement and its central axis 8 to the central axis of the optical path 7 can be introduced to make sure, that the wave-front 10 enters the following functional segment, here the distribution core 9. The function of the input element 6 is to guide light covering a broad range of wavelength, with minimal loss and dispersion, into the distribution core 9.

The distribution core 9 as shown in figure 3 is designed as a large-core multi-mode fibre. In the simplest case, the core 9 is a cylinder placed along the fibre axis. The index profile can be a single-step function or a gradient function to adjust the mode diameter and distribution. The length and the core diameter of the distribution core is designed, so that light propagates in the distribution core 9 like it does in free space with a uniform core index distribution. At an outlet plane 11 of the distribution core 9 a wave-front 10 is formed in such a manner such that this wave-front 10 reaches the incident plane 12 of the dispersive waveguide element 4, respectively the dispersive waveguide bundle, without reflection at the interface between core and cladding 17 or multi-mode interference.

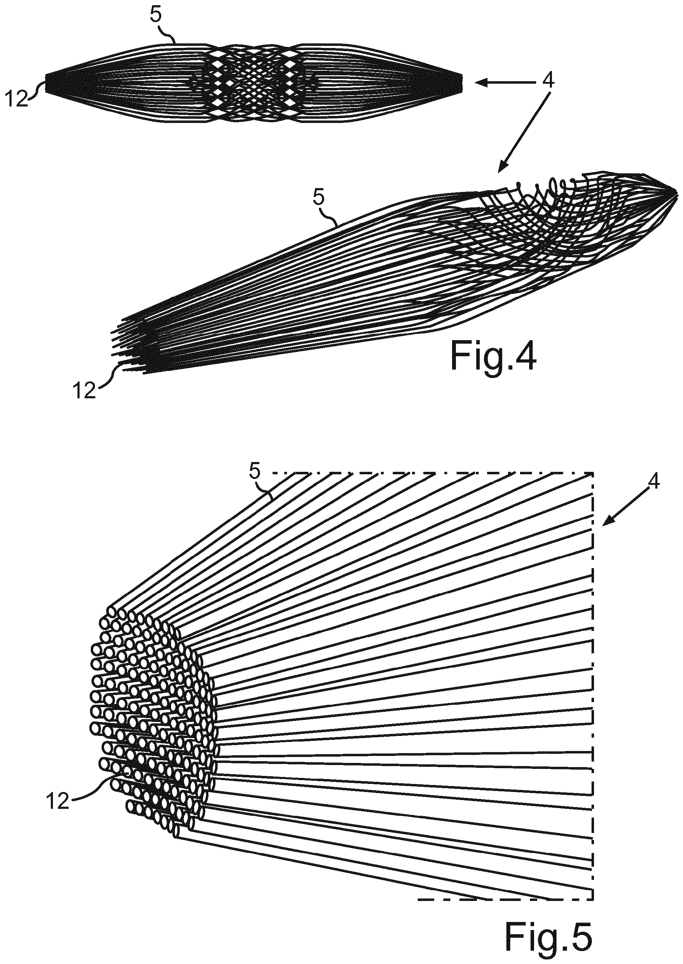

The function of the dispersive waveguide bundle 4 is, to break the incoming wave-front 10 and carry them through individual waveguides arranged in a 3D core bundle, respectively matrix. Favourably, the dispersive waveguide bundle 4 comprises at least two, advantageously multiple optical fibres having different optical path lengths. One common form of the waveguide bundle 4 is a combination of straight and curved cylinders or fibres building different waveguides 5, as shown in figure 4. Other forms are also possible to utilize the 3D space more efficiently, e. g. with helix structures as shown in figure 4, spline structures or a combination of free-forms. Independent from the bundle form, the dispersive waveguide element 4 according to this embodiment fulfils four criteria in the design of the dispersive waveguide bundle 4.

For an efficient coupling of the distribution core 9 to the dispersive waveguide bundle 4, the normal of the incident planes 12 of the different waveguides 5 in the bundle 4 should match the normal of the local wave-front surface adjacent to the incident plane of the respective waveguide 5. The wave-front surface is essentially an equal-phase plane that originates from the input of the distribution core 9 and arrives at the incident plane 12, respectively input plane of the dispersive waveguide element 4.

In this context figure 5 illustrates the placement of the waveguide bundle on the wave-front surface at the input plane 12 of the dispersive waveguide bundle 4. Each waveguide 5 of this dispersive waveguide bundle 4 is oriented along the normal direction of the local wave-front surface area.

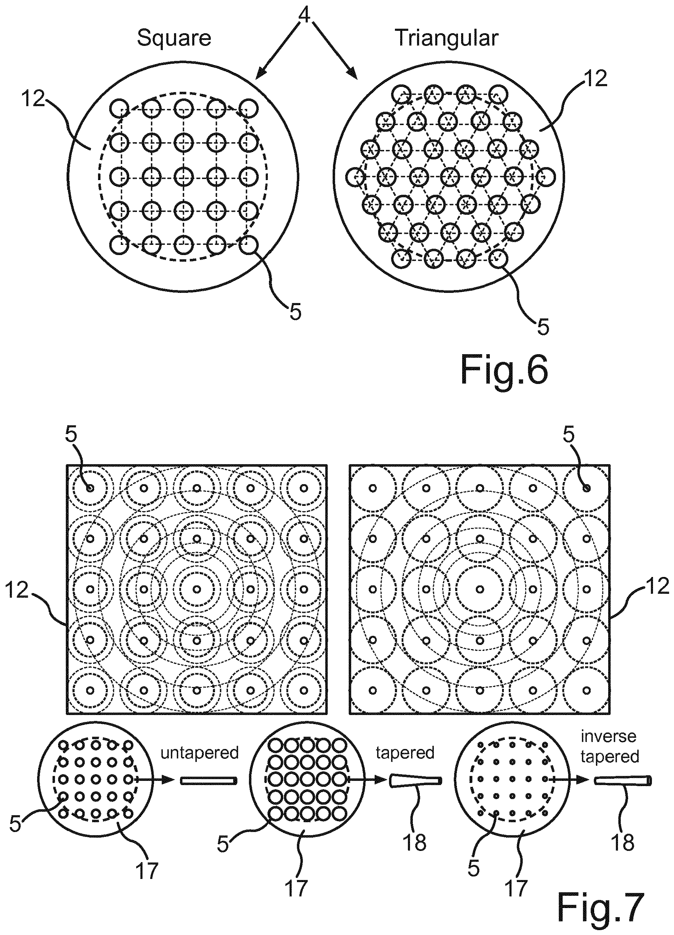

Figure 6 shows, that the distribution of the waveguides 5 on the wave-front surface defines a 2D matrix. This matrix can be a periodic grid following a triangular, quadrilateral and higher-order polygonal patterns, as also indicated in figure 6.

To minimize the transition loss, the waveguides 5 are be densely packed, so that the sum of the field distribution of the individual waveguides 5 should cover the input mode field distribution at the incident plane of the dispersive waveguide bundle 4.

To further maximize the mode-field coverage, tapers 18 can be used to enhance the mode field coverage from the common wave-front at the output plane 11 of the distribution core 9 to the individual waveguide mode in the 3D bundle, as indicated in figure 7. These tapers 18 can be made with a core diameter larger than the normal single-mode waveguide, but this may lead to multimode coupling and cause extra loss and phase errors. Therefore, the tapers 18 are preferably made with a core diameter much smaller than the normal single-mode waveguide, so called inverse taper 18. These inverse tapers 18 may prove challenging for the fabrication technology, but holds the advantage that the mode field is enlarged without the risk of generating higher order modes.

Instead of geometrical tapers 18, in which the physical dimension of the core region is adiabatically transitioned, the taper can also be realized by introducing a gradient index change along the light propagation direction.

The taper 18 transition, either by core size variation or gradient index change, should be adiabatic, i.e., a smooth transition has to be ensured to prevent excessive light scattering in the taper 18 region. Light propagating after the taper region should be uncoupled among the waveguides 5 in the bundle.

The form of the bundle can be arbitrary in the 3D space confined by the cladding, however, the optical path of the waveguide bundle must follow the following Eq. (1):

$$l_{ij} = l_{00} + i \cdot \Delta l_1 + j \cdot \Delta l_2 , \qquad (1)$$

where the integers $i$, $j$ are the horizontal and vertical waveguide 5 numbers (i, j >= 0), $l_{00}$ is the optical length of the shortest waveguide in the bundle (i = j = 0) and $\Delta l_1$, $\Delta l_2$ is the optical path length increase in horizontal and vertical direction of the grating, respectively.

The path length increase is defined by Eq. (2):

$$\Delta l_{1,2} = \frac{\lambda_0^2}{n_g \cdot FSR_{1,2}} , \qquad (2)$$

where $\lambda_0$ is the central wavelength, $n_g$ is the group effective index of the waveguide bundle 4 and $FSR_{1,2}$ is the free spectral range (Brillouin zone) for horizontal and vertical dispersion.

The coupling of the dispersive waveguide bundle 4 to the following imaging core 13 could be similar to the coupling of the distribution core 9 to the incident plane 12 of the dispersive waveguide element respectively bundle 4. In any case it is important, that the outlet plane of the dispersive waveguide element 4 is coupled to the incident plane of the imaging core 13 in a manner such that an effective coupling is realized, transition loss is minimized and the mode-field coverage is maximized. Therefore, to achieve an effective coupling between the dispersive waveguide element 4 and the imaging core 13, the same arrangements as already described regarding the coupling of a distribution core 9 to the dispersive waveguide element 4 could be used.

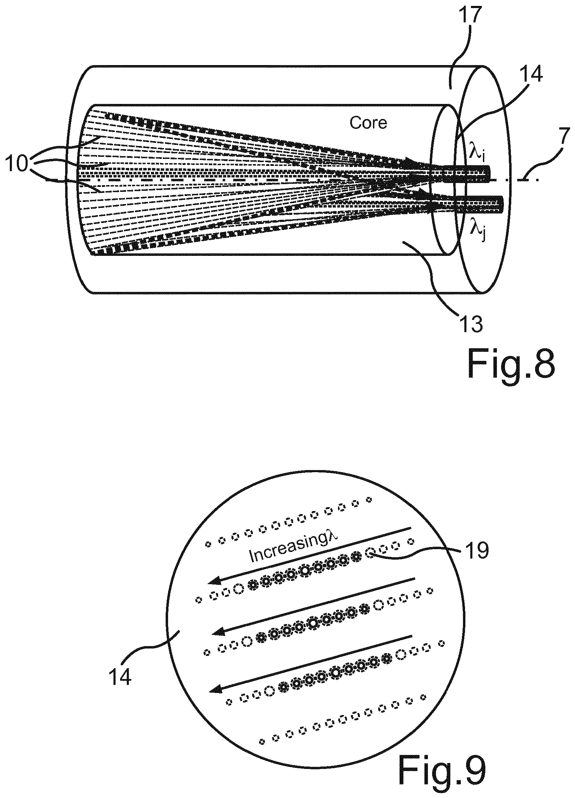

The imaging core 13, as shown in Fig. 8, is similar to a reversed placement of the distribution core 9. In the simplest case, the core is a cylinder placed along the waveguide axis. The index profile can be a single-step function or gradient function to adjust the mode diameter. The length of and core diameter of the imaging core 13 is designed so that light propagates in the imaging core 13 like it does in free space with a uniform core index distribution, without reaching the core-cladding-interface or disturbances caused by any defects.

In the imaging core 13 the wave-fronts 10 coming from the waveguide bundle 4 propagate and interfere with each other. Due to the well-designed phase-relations among these wave-fronts 10 according to Eq. (1), the final interference pattern will appear on the output plane or focusing plane 14 of the imaging core 13 in the form of one or a group of focusing spots. Each focusing spot represents one wavelength channel. The location of the focusing spots are separated with respect to the wavelength. An Example of the distribution is shown in figure 9.

The free spectral range of the spectrometer is given by Eq. (3).

$$ FSR_{1,2} = \frac{n_{eff}\,\lambda_0}{n_g\,m_{1,2}}, \qquad (3) $$

where $n_{eff}$ is the effective index of the propagating mode in the waveguide bundle and $m_{1,2}$ is the horizontal and vertical grating order.

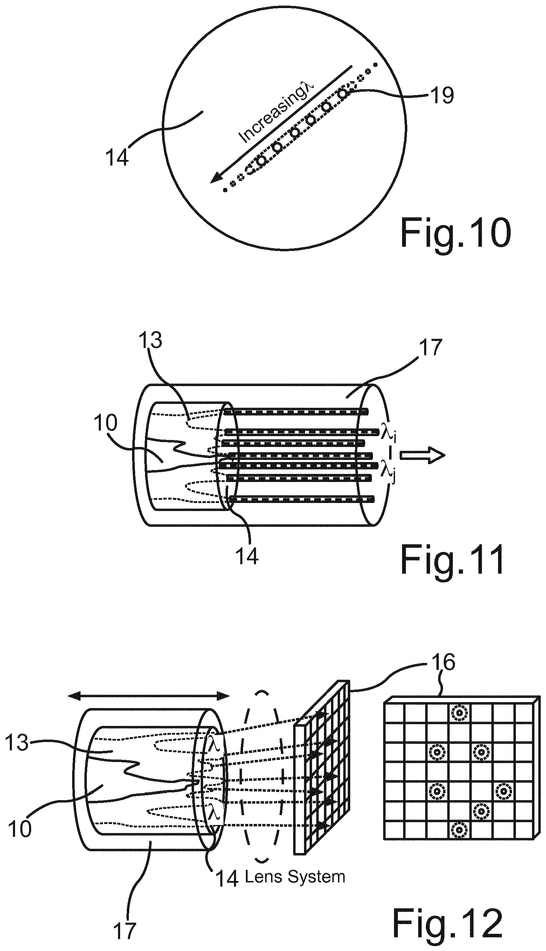

The focusing spots representing the wavelength channels will follow a repeated diagonal path on the image plane. This path is called the focusing path. The wavelength channel will reappear after a cycle of free spectral range. The number of focusing paths and the distance between them can be controlled by varying $\Delta l_1$, $\Delta l_2$. In the case $\Delta l_1 = \Delta l_2$, the focusing path will degenerate into one 45°-diagonal line, as shown in figure 10.

The output element 15 of the spectrometer, as shown in Fig. 11, comprises a group of single-mode waveguides 5 connected to the focusing plane 14 of the imaging core 13. By the output element 15 the focusing spots are coupled into single-mode waveguides. The waveguides 5 can proceed through an optional fan-out transition and get further separated to prevent cross-channel coupling. The multi-core waveguides carry the separated wavelength channels without significant cross-talk before reaching a detector, a camera system or other optical components 16, e. g. optical filters and detectors for signal processing.

Wavelength channels coming from the output or focusing plane 14 of the imaging core 13 can proceed through an optional, non-guided, free-space-based lens system before they impinge onto a 2-dimensional (2D) sensor array 16, as indicated in figure 12. Then it is possible to convert the separated wavelength channels into electronic signals for further processing, imaging and/or display.

The sensor array 16 can be a photo detector array, a charge-coupled device (CCD) sensor chip, a CMOS sensor, an infrared array, or a camera system. The pitch between the sensing units on the array should match the distribution of the focusing spots on the focusing plane 14 so that the light spots can be efficiently collected by the detector array either directly or via transformation through a lens system. The pixel size of the image sensor should be small enough to recognize the focusing spots without serious cross-talk.

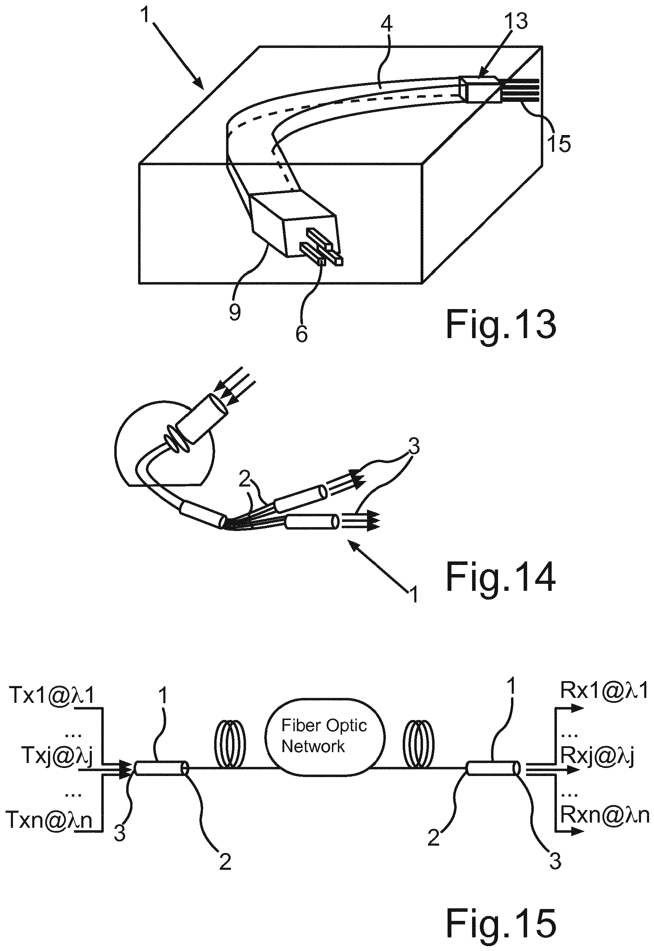

The proposed spectrometer 1 can also be realized in a bulk material system as shown in figure 13. The cylindrically shaped core and cladding 17 can be replaced by channel waveguides, ridge waveguides or other forms commonly known in the field of photonic integrated circuits (PIC) and planar lightwave circuits (PLC). The functions provided by the functional segments described above remain the same. In a bulk material, e.g. glass block, the restriction on the cladding size can be alleviated and the design can be made simpler with wider fan-out region for the waveguide bundle.

In the following specific applications for the use of a spectrometer 1 according to the invention are described. In the following it is referred to a spectrometer 1 comprising the main technical features of the invention as all-fibre spectrometer (AFS). In general, the AFS can be used as an efficient spectrometer 1 in any optical systems that utilize optical fibres as light guiding medium. Below, three implementation examples are given:

    1) Spectrograph in an astronomical telescope system;
    2) Wavelength (de)multiplexer in a wavelength division multiplexing (WDM) optical transmission network and
    3) Read-out units for an optical sensing network.

As shown in Fig. 14, in an astronomical observatory, light collected through the telescope system can be coupled through an input 2 into a bundle of multimode fibres (MMFs) 4. The MMFs carry light over a short distance to the processing site, where mode-converter devices such as photonic lanterns transform the random distribution of the light modes in a MMF and guide light into an array of single-mode fibres (SMFs). The SMFs can then be grouped and connected to an AFS according to the invention.

The AFS separates the wavelength components and guide them to other optical components or directly to optoelectronic detectors for signal and image processing.

Compared to conventional spectrographs based on prism, free-space-based gratings, lenses and other optical components, spectropraphs based on AFS according to this invention are more compact, require lower maintenance costs and allow more flexible operation.

As shown in Fig. 15, in a wavelength division multiplexing (WDM) fiber-optic network, the AFS 1 according to this invention can realize the optical add-drop multiplexing (OADM) function, allowing one or more wavelength channels to be added to and/or dropped (removed) from an existing multi-wavelength WDM signal.

With the AFS 1 according to this invention, the optical interfaces can be connected by standard and commercially available optical fibre connectors. The optical interfaces can also be secured by optical fibre slicing. Compared to conventional solution based on planar lightwave circuits, e. g. an arrayed waveguide grating (AWG), the inventive technology using an AFS is more compact, more efficient and more reliable in terms of the temperature and mechanical stability of the optical interfaces.

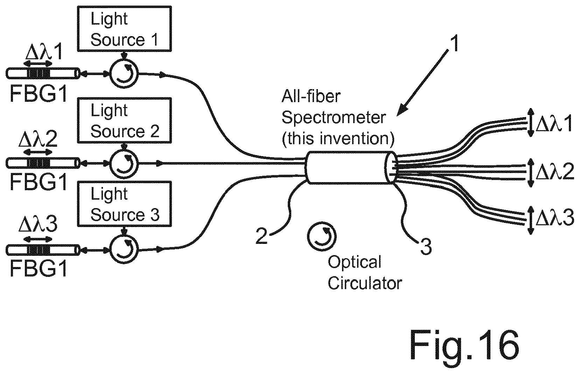

Finally, in an optical sensing network, the AFS 1 according to this invention can be used to translate the wavelength shift of the sensing signal into light intensity variation among different physical channels. As shown in Fig. 16, the fibre Bragg gratings (FBG) serves as the sensor units. Light of a broad spectrum or a tunable laser source is injected into one FBG via an optical circulator. The sensing signal is reflected by the FBG and further guided by the circulator into the AFS. Changes of the temperature, stress, bending angle changes or other parameters will cause the FBG to shift the wavelength of the reflected signal. This wavelength shift ($\Delta\lambda$) will be detected by the AFS at the output side, e.g. via an array of photodetectors. By evaluating the ratio of the photocurrent among the output channels of the AFS, $\Delta\lambda$ can be calculated and further translated to the value of the sensing signal.

An AFS can be connected to a group of FBGs as a compact and efficient optical wavelength interpreter. In this case, the ranges of the wavelength shifts need to be organized in groups so that the corresponding outputs of the AFS can be identified without sever spectral overlapping that complicates the electronic signal processing and decoding of the sensing signals.

Using all-fibre spectrometer (AFS) 1 as read-out unit for an optical sensing network eliminates the need to connect a bulky and expensive optical spectrum analyzer to determine the wavelength changes. The AFS-based solution is very compact, highly efficient, low-cost and allows flexible operation in extreme situations where bulky optical instruments cannot fit in.

List of reference numbers

**[0066]**

1 spectrometer
2 input
3 output
4 dispersive waveguide element
5 waveguide
6 input element
7 central axis of the optical path
8 central axis of the input element
9 distribution core
10 wave-front
11 outlet plane of the distribution core
12 incident plane of the separate waveguides
13 imaging core
14 focusing plane
15 output element
16 sensor-array
17 cladding
18 taper

**Claims**

1. Spectrometer (1) comprising an input (2) and an output (3) for electromagnetic radiation and an optical means being arranged between said input (2) and output (3) for splitting the electromagnetic radiation into at least two parts of radiation of different wavelengths in such a way that radiation of a first wavelength appears at a first location on an outlet surface area of the output (3) while radiation of a second wavelength appears at a second location on the outlet surface of the output (3),
**characterized in that**, the input is realized as input element (6) comprising a single mode fibre for optically guiding incoming electromagnetic radiation to a distribution core (9) which is designed in such a manner that a wave-front (10) of said radiation is formed on an outlet plane (11) of the distribution core (9) being arranged at an interface to a dispersive waveguide element (4) optically coupled to the distribution core (9), said dispersive waveguide element (4) is made of a bundle of multiple optical fibres (5) used as waveguides, having different optical path lengths, wherein the wave-front (10) of the radiation propagating through the distribution core (9) is formed on the incident plane (12) of the optical fibres (5), and fibres of the dispersive waveguide element (4) are arranged to define a two-dimensional matrix and in a manner such that the normal of the incident plane (12) of each fibre (5) of the dispersive waveguide element (4) matches with a normal of the local wave-front surface adjacent to the incident plane (12) of said fibre (5), said dispersive waveguide element (4) splits the electromagnetic radiation into at least two parts of radiation and guides the radiation into an imaging core (13), where different wave-fronts leaving different optical fibres (5) of the dispersive waveguide element (4) propagate and interfere with each other in a manner such that at least one typical interference pattern in the form of one or a group of focusing spots appears on an output plane (14) of the imaging core (13) and radiation of at least two different wavelengths leaving the output plane (14) is guided into a multi-core single-mode waveguide (15) and/or a sensor array (16) for further processing.

2. Spectrometer according to claim 1, **characterized in that**, one (5a) of the waveguides (5) is straight while another waveguide (5b) is curved.

3. Spectrometer according to claim 1 or 2, **characterized in that**, one (5a) of the waveguides (5) is straight while another one (5b) has a helix, spline, or free-form structure.

4. Spectrometer according to one of the claims 1 to 3, **characterized in that**, between the input (2) and the dispersive waveguide element (4) a distribution core (9) with a length and a core diameter is arranged, so that light propagates like it does in free space with uniform core index distribution.

5. Spectrometer according to one of the claims 1 to 4, **characterized in that**, between the input (2) and the dispersive waveguide element (4) a distribution core (9) is arranged and formed in a manner such that, reflection at the interface between core and cladding and/or multi-mode interference are avoided.

6. Spectrometer according to at least one of the preceding claims, **characterized in that** the dispersive waveguide element (4) comprises at least three separate waveguides (5), whose incident planes (12) adjacent to the wave-front build a triangular grid.

7. Spectrometer according to claims 1 to 5, **characterized in that**, the dispersive waveguide element (4) comprises at least four waveguides (5), whose incident planes (12) adjacent to the wave-front build a quadrilateral and/or a higher-order polygonal pattern.

8. Spectrometer according to claim 1 to 7, **characterized in that**, the waveguides (5) of the dispersive waveguide element (4) are at least in sections tapered.

9. Spectrometer according to claim 1 to 8, **characterized in that** the gradient index along the optical path of the waveguides (5) of the dispersive waveguide element (4) changes along the light propagation direction.

## Patentansprüche

1. Spektrometer (1), welches einen Eingang (2) und einen Ausgang (3) für elektromagnetische Strahlung und ein optisches Mittel umfasst, welches Mittel zum Aufspalten der elektromagnetischen Strahlung in mindestens zwei Teile der Strahlung mit unterschiedlichen Wellenlängen zwischen dem Eingang (2) und dem Ausgang (3) angeordnet ist, derart, dass Strahlung mit einer ersten Wellenlänge an einer ersten Stelle auf einer Auslassfläche des Ausgangs (3) erscheint, während Strahlung mit einer zweiten Wellenlänge an einer zweiten Stelle auf einer Auslassfläche des Ausgangs (3) erscheint, **dadurch gekennzeichnet, dass** der Eingang als ein Eingangselement (6) realisiert ist, das eine Singlemode-Faser zum optischen Führen einfallender elektromagnetischer Strahlung zu einem Verteilungskern (9) umfasst, welcher derart ausgelegt ist, dass eine Wellenfront (10) der Strahlung auf einer Auslassebene (11) des Verteilungskerns (9) gebildet wird, welche an einer Grenzfläche zu einem dispersiven Wellenleiterelement (4) angeordnet ist, das optisch an den Verteilungskern (9) gekoppelt ist, wobei das dispersive Wellenleiterelement (4) aus einem Bündel aus mehreren optischen Fasern (5) besteht, die als Wellenleiter verwendet werden, die unterschiedliche optische Weglängen aufweisen, wobei die Wellenfront (10) der Strahlung, die sich durch den Verteilungskern (9) ausbreitet, auf der Einfallsebene (12) der optischen Fasern (5) gebildet wird und Fasern des dispersiven Wellenleiterelementes (4) zum Definieren einer zweidimensionalen Matrix geeignet und derart angeordnet sind, dass die Normale der Einfallsebene (12) jeder Faser (5) des dispersiven Wellenleiterelementes (4) mit einer Normalen der lokalen Wellenfrontfläche angrenzend an die Einfallsebene (12) der Faser (5) übereinstimmt, wobei das dispersive Wellenleiterelement (4) die elektromagnetische Strahlung in mindestens zwei Teile der Strahlung aufteilt und die Strahlung in einen Bildgebungskern (13) führt, in welchem sich unterschiedliche Wellenfronten, die unterschiedliche optische Fasern (5) des dispersiven Wellenleiterelementes (4) verlassen, ausbreiten und derart miteinander interferieren, dass mindestens ein typisches Interferenzmuster in Form von einem oder einer Gruppe von Fokussierpunkten auf einer Ausgangsebene (14) des Bildgebungskerns (13) erscheint und Strahlung mit mindestens zwei unterschiedlichen Wellenlängen, welche die Ausgangsebene (14) verlässt, zur weiteren Verarbeitung in einen Mehrkern-Singlemode-Wellenleiter (15) und/oder eine Sensoranordnung (16) geführt wird.

2. Spektrometer nach Anspruch 1,
**dadurch gekennzeichnet, dass** einer (5a) der Wellenleiter (5) gerade ist, während ein anderer Wellenleiter (5b) gekrümmt ist.

3. Spektrometer nach Anspruch 1 oder 2,
**dadurch gekennzeichnet, dass** einer (5a) der Wellenleiter (5) gerade ist, während ein anderer (5b) eine Helix-, Spline- oder Freiformstruktur aufweist.

4. Spektrometer nach einem der Ansprüche 1 bis 3,
**dadurch gekennzeichnet, dass** zwischen dem Eingang (2) und dem dispersiven Wellenleiterelement (4) ein Verteilungskern (9) mit einer Länge und einem Kerndurchmesser angeordnet ist, sodass sich Licht so ausbreitet, wie es dies im freien Raum mit gleichmäßiger Kernindexverteilung tut.

5. Spektrometer nach einem der Ansprüche 1 bis 4,
**dadurch gekennzeichnet, dass** zwischen dem Eingang (2) und dem dispersiven Wellenleiterelement (4) ein Verteilungskern (9) angeordnet und derart ausgebildet ist, dass Reflexionen an der Grenzfläche zwischen Kern und Mantel und/oder Multimode-Interferenz vermieden werden.

6. Spektrometer nach mindestens einem der vorhergehenden Ansprüche,
**dadurch gekennzeichnet, dass** das dispersive Wellenleiterelement (4) mindestens drei separate Wellenleiter (5) umfasst, deren Einfallsebenen (12) angrenzend an die Wellenfront ein dreieckiges Gitter bilden.

7. Spektrometer nach Anspruch 1 bis 5,
**dadurch gekennzeichnet, dass** das dispersive Wellenleiterelement (4) mindestens vier Wellenleiter (5) umfasst, deren Einfallsebenen (12) angrenzend an die Wellenfront ein vierseitiges Muster und/oder ein polygonales Muster höherer Ordnung bilden.

8. Spektrometer nach Anspruch 1 bis 7,
**dadurch gekennzeichnet, dass** die Wellenleiter (5) des dispersiven Wellenleiterelementes (4) zumindest abschnittsweise verjüngt sind.

9. Spektrometer nach Anspruch 1 bis 8,
**dadurch gekennzeichnet, dass** sich der Gradientenindex entlang des optischen Weges der Wellenleiter (5) des dispersiven Wellenleiterelementes (4) entlang der Lichtausbreitungsrichtung ändert.

**Revendications**

1. Spectromètre (1) comprenant une entrée (2) et une sortie (3) pour un rayonnement électromagnétique et un moyen optique, ledit moyen servant à diviser ce rayonnement électromagnétique en au moins deux parties du rayonnement ayant des longueurs d'onde différentes et étant disposé entre ladite entrée (2) et ladite sortie (3), de telle sorte que le rayonnement ayant une première longueur d'onde apparaisse à un premier endroit sur une surface de sortie de ladite sortie (3), tandis que le rayonnement ayant une deuxième longueur d'onde apparaisse à un deuxième endroit sur une surface de sortie de ladite sortie (3),
**caractérisé en ce que** ladite entrée est réalisée sous la forme d'un élément d'entrée (6) comprenant une fibre monomode pour guider optiquement le rayonnement électromagnétique incident vers un noyau distributeur (9) lequel est conçu de telle sorte qu'un front d'onde (10) de ce rayonnement est formé sur un plan de sortie (11) dudit noyau distributeur (9), plan qui est situé à une interface avec un élément guide d'onde dispersif (4) lequel est couplé optiquement au dit noyau distributeur (9), ledit élément guide d'onde dispersif (4) étant composé d'un faisceau de plusieurs fibres optiques (5) utilisées comme guides d'ondes et ayant des longueurs de trajet optique différentes, ledit front d'onde (10) du rayonnement qui se propage à travers ledit noyau distributeur (9), étant formé sur le plan d'incidence (12) des dites fibres optiques (5), et des fibres dudit élément guide d'onde dispersif (4) convenant pour définir une matrice bidimensionnelle et étant agencées de telle sorte que la normale au dit plan d'incidence (12) de chacune des dites fibres (5) dudit élément guide d'onde dispersif (4) coïncide avec une normale à la surface de front d'onde locale adjacente au dit plan d'incidence (12) de ladite fibre (5), ledit élément guide d'onde dispersif (4) divisant le rayonnement électromagnétique en au moins deux parties du rayonnement et guidant le rayonnement dans un noyau d'imagerie (13) dans lequel se propagent différents fronts d'onde qui sortent de différentes fibres optiques (5) dudit élément guide d'onde dispersif (4) et interfèrent les uns avec les autres de telle sorte qu'au moins un motif d'interférences typique sous la forme d'un point de focalisation ou d'un groupe de points de focalisation apparaisse sur un plan de sortie (14) dudit noyau d'imagerie (13) et que le rayonnement avec au moins deux longueurs d'onde différentes, qui quitte le plan de sortie (14), soit guidé pour un traitement ultérieur dans un guide d'ondes monomode à plusieurs noyaux (15) et/ou un ensemble de détecteurs (16).

2. Spectromètre selon la revendication 1,
**caractérisé en ce que** l'un (5a) desdits guides d'ondes (5) est droit, tandis qu'un autre guide d'ondes (5b) est incurvé.

3. Spectromètre selon la revendication 1 ou 2, **caractérisé en ce que** l'un (5a) desdits guides d'ondes (5) est droit, tandis qu'un autre (5b) a une structure hélicoïdale, spline ou est de forme libre.

4. Spectromètre selon l'une des revendications 1 à 3, **caractérisé en ce qu'**un noyau distributeur (9) ayant une longueur et un diamètre de noyau est disposé entre ladite entrée (2) et ledit élément guide d'onde dispersif (4) de sorte que la lumière se propage comme elle le fait dans l'espace libre avec une distribution d'indice de noyau uniforme.

5. Spectromètre selon l'une des revendications 1 à 4, **caractérisé en ce qu'**un noyau distributeur (9) est disposé entre ladite entrée (2) et ledit élément guide d'ondes dispersif (4) et est conçu de telle sorte que les réflexions à l'interface entre le noyau et la gaine et/ou l'interférence multimode sont évitées.

6. Spectromètre selon au moins une des revendications précédentes, **caractérisé en ce que** ledit élément guide d'onde dispersif (4) comprend au moins trois guides d'onde séparés (5) dont les plans d'incidence (12) adjacents au front d'onde forment une grille triangulaire.

7. Spectromètre selon les revendications 1 à 5, **caractérisé en ce que** ledit élément guide d'onde dispersif (4) comprend au moins quatre guides d'onde (5) dont les plans d'incidence (12) adjacents au front d'onde forment un motif à quatre côtés et/ou un motif polygonal d'ordre supérieur.

8. Spectromètre selon les revendications 1 à 7, **caractérisé en ce que** lesdits guides d'ondes (5) dudit élément guide d'ondes dispersif (4) sont effilés au moins par sections.

9. Spectromètre selon les revendications 1 à 8, **caractérisé en ce que** l'indice de gradient varie le long du trajet optique des guides d'ondes (5) dudit élément guide d'ondes dispersif (4) le long de la direction de propagation de la lumière.

Fig.1

Fig.2

Core

Central Axis

Fig.3

Fig.4

Fig.5

Square                                    Triangular

Fig.6

untapered

tapered

inverse
tapered

Fig.7

Fig.8

Fig.9

Increasingλ

19

14

Fig.10

13

17

10

$\lambda_i$

$\lambda_j$

14

Fig.11

16

13

10

$\lambda$

$\lambda$

14 Lens System

17

Fig.12

Fig.13

Fig.14

Tx1@λ1
...
Txj@λj
...
Txn@λn

Fiber Optic Network

Rx1@λ1
...
Rxj@λj
...
Rxn@λn

Fig.15

Fig.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011044618 A1

- CA 2316253

**Non-patent literature cited in the description**

- **Z. XU ; Z. WANG ; M. E. SULLIVAN ; D. J. BRADY ; S. H. FOULGER ; A. ADIBI.** Multimodal multiplex spectroscopy using photonic crystals. *Opt. Express,* 2003, vol. 11 (18), 2126-2133
- **T. W. KOHLGRAF-OWENS ; A. DOGARIU.** Transmission matrices of random media: means for spectral polarimetric measurements. *Opt. Lett.,* 2010, vol. 35 (13), 2236-2238
- **Q. HANG ; B. UNG ; I. SYED ; N. GUO ; M. SKOROBOGATIY.** Photonic bandgap fiber bundle spectrometer. *Appl Opt.,* 2010, vol. 49 (25), 4791-4800

- **B. REDDING ; H. CAO.** Using a multimode fiber as a high-resolution, low-loss spectrometer. *Opt. Lett.,* 2012, vol. 37 (16), 3384-3386
- **ANDREAS STOLL et al.** High-Resolution Arrayed-Waveguide-Gratings in Astronomy: Design and Fabrication Challenges. *PHOTONICS,* 10 April 2017, vol. 4 (2), 30
- Development of high-resolution arrayed waveguide grating spectrometers for astronomical applications: first results. **GATKINE PRADIP et al.** PROCEEDINGS OPTICAL DIAGNOSTICS OF LIVING CELLS II. SPIE, 22 July 2016, vol. 9912, 991271-991271